# EUROPÄISCHE PATENTSCHRIFT

(11) **EP 1 528 996 B1**
(45) Veröffentlichungstag und Bekanntmachung des Hinweises auf die Patenterteilung: **03.08.2011**
(21) Anmeldenummer: 03704601.8
(22) Anmeldetag: 13.02.2003
(51) Int. Cl.: B60T 8/36, B60T 8/88, B60T 17/22

(54) **VERFAHREN UND VORRICHTUNG ZUR BEREITSTELLUNG VON BETRIEBSDATEN VON FUNKTIONSKOMPONENTEN EINES KRAFTFAHRZEUGBREMSENSTEUERGERÄTS**
METHOD AND DEVICE FOR PROVIDING OPERATING DATA OF FUNCTIONAL COMPONENTS OF A MOTOR VEHICLE BRAKING CONTROL UNIT
PROCEDE ET DISPOSITIF PERMETTANT DE FOURNIR DES DONNEES DE FONCTIONNEMENT DE COMPOSANTS FONCTIONNELS D'UN APPAREIL DE COMMANDE DE FREINAGE DE VEHICULE AUTOMOBILE

(30) Priorität: 18.04.2002 DE 10217436
(43) Veröffentlichungstag der Anmeldung: 11.05.2005
(73) Patentinhaber: Continental Teves AG & Co. oHG, 60488 Frankfurt (DE)
(72) Erfinder: DINKEL, Dieter, 65824 Schwalbach (DE); BRIESEWITZ, Rüdiger, 63486 Bruchköbel (DE); EHMER, Norbert, 65760 Eschborn (DE); ESSELBRÜGGE, Hermann, 64331 Weiterstadt (DE); KELLER, Lothar, 61381 Friedrichsdorf (DE); LOOS, Mirco, 66583 Elversberg (DE); MARSCHKE, Karl, 63110 Rodgau (DE); MERZOUG, Patrick, 65795 Hattersheim (DE); SCHIFFNER, Klaus, 64546 Mörfelden-Walldorf (DE); SCHMITT, Stefan A., 63741 Aschaffenburg (DE); SCHMIDT, Robert, 56477 Rennerod (DE)
(86) Internationale Anmeldenummer: PCT/EP2003/001408
(87) Internationale Veröffentlichungsnummer: WO 2003/086830

(56) Entgegenhaltungen:
- EP-A- 1 167 147
- DE-A- 10 014 994
- DE-A- 19 707 207
- US-A- 5 521 588
- US-B1- 6 312 061
- PATENT ABSTRACTS OF JAPAN vol. 2000, no. 15, 6. April 2001 (2001-04-06) & JP 2000 335331 A (NISSAN DIESEL MOTOR CO LTD), 5. Dezember 2000 (2000-12-05)

## Beschreibung

Die Erfindung betrifft ein Verfahren gemäß Oberbegriff von Anspruch 1 sowie ein elektrohydraulisches Bremsensteuergerät gemäß Oberbegriff von Anspruch 13, wie beispiels weise aus der US 6 312 064 B1 bekannt.

Aus der WO 01/85511 A1 ist ein elektrohydraulisches Steuergerät für geregelte Kraftfahrzeugbremssysteme (ABS, ESP etc.) bekannt, welches aus einem elektronischen Steuergerät und einem mit dem elektronischen Steuergerät über eine Steckverbindung verbundene Hydraulikeinheit besteht. Auf der dem Regler gegenüberliegenden Seite der Hydraulikeinheit ist ein Pumpenmotor zum selbsttätigen Aufbau von hydraulischem Druck angeflanscht. Die Stromversorgung des Pumpenmotors wird über eine stabförmige Durchführung, welche durch eine zylinderförmige Bohrung im Hydraulikblock führt, realisiert. Die Durchführung, welche mit der Elektronikeinheit verbunden ist, wird bei der Montage durch die Bohrung im Ventilblock geschoben, wodurch der elektrische Kontakt zum Motor hergestellt wird. Die Hydraulikeinheit umfasst elektrisch ansteuerbare Magnetventile, welche mit den Radbremsen über Hydraulikleitungen verbunden sind. Bei diesen Ventilen kann es sich um Schaltventile oder auch um Analogventile handeln. Analogventile kommen zunehmend dann zum Einsatz, wenn an das Bremssystem hohe Anforderungen bezüglich Komfort und Regelgüte gestellt werden. Auf der dem Gehäuse der Elektronikeinheit zugewandten Stirnfläche des Hydraulikblocks sind je nach Bauweise des Bremssystems ein oder mehrere Drucksensorelemente befestigt. Die Drucksensorelemente sind über elektrische Verbindungen lösbar mit einem im Inneren der Elektronikeinheit angeordneten Mikrorechner verbunden.

Für einige Komponenten der Hydraulikeinheit ist es erforderlich, dass Kalibrierdaten, wie insbesondere Kalibrierdaten für die analog ansteuerbaren elektrohydraulischen Ventile, dauerhaft gespeichert werden. Hierzu ist üblicherweise ein Permanentspeicher in der Elektronikeinheit vorgesehen.

Es besteht das Problem, dass die gespeicherten Kalibrierdaten bei einem Defekt bzw. Austausch der Elektronikeinheit in der Regel verloren gehen. Es ist daher bisher nicht ohne weiteres möglich, eine defekte Elektronikeinheit als solche auszutauschen. Eine Reparatur konnte auf einfache Weise nur dadurch erfolgen, dass sowohl die Elektronikeinheit als auch die Hydraulikeinheit gemeinsam durch eine neue, werksseitig kalibrierte Einheit ersetzt wurde. Andererseits besteht zusätzlich der Bedarf, einen Kontrollmechanismus zur Verfügung zu haben, welcher eine unzulässige Paarung von Elektronikeinheit und Hydraulikeinheit, z.B. die Kombination eines OHB-V-Regler mit einem nicht für OHB-V geeigneten Ventilblock, welche baulich möglich ist, erkennt.

Aufgabe der vorliegenden Erfindung ist es, den zuvor geschilderten Nachteil fehlender Kalibrierdaten zu überwinden und gleichzeitig eine Möglichkeit zur Erkennung von unzulässigen Paarungen anzugeben.

Diese Aufgabe wird gelöst durch das Verfahren gemäß Anspruch 1.

Nach der Erfindung werden Betriebsdaten, welche Kalibrierdaten und Kenndaten (z.B. Seriennummern, Typbezeichnungen usw.) sind, außerhalb der Elektronikeinheit, vorzugsweise im Bereich der von der Elektronikeinheit abtrennbaren Hydraulikeinheit gespeichert. Im Falle von Kalibrierdaten bleiben diese bei einem Austausch der Elektronikeinheit erhalten. Durch Speicherung von Kenndaten außerhalb der Elektronikeinheit ist es möglich, z.B. bei jeder Initialisierung der Elektronikeinheit (Zündungshochlauf) eine Kontrolle vorzunehmen, ob die Elektronikeinheit mit der Hydraulikeinheit zulässig gepaart ist. Die Speicherung der Betriebsdaten kann beispielsweise in vorhandenen elektronischen Funktionsgruppen der Hydraulikeinheit erfolgen. Hierzu wird entweder ein vorhandenes Speicherelement mitbenutzt oder es wird ein eigens für die Speicherung der Betriebsdaten vorgesehenes zusätzliches Speicherelement in eine vorhandene elektronische Funktionsgruppe eingefügt.

Nach einer ersten besonders bevorzugten Ausführungsform der Erfindung werden die Kalibrierdaten im Bereich der Elektronik eines an die Hydraulikeinheit angeflanschten Pumpenmotors permanent gespeichert.

Es ist nach einer zweiten besonders bevorzugten Ausführungsform möglich, dass die zu speichernden Daten in Steuergeräten gespeichert werden, die zwar über einen Datenbus mit dem Bremsensteuergerät verbunden sind, aber nicht unmittelbar zum Bremssystem gehören, wie zum Beispiel in einem Speicher der Motorelektronik, der Klimaanlage, der Beleuchtung oder dem Armaturenbrett.

Nach einer dritten besonders bevorzugten Ausführungsform der Erfindung werden die Kalibrierdaten in einem extern angeordneten elektronischen Bauelement oder Steuergerät gespeichert, welches zum Bremssystem gehört. Entsprechende Bauelemente oder Steuergeräte können beispielsweise Gierratensensoren, Beschleunigungssensoren, Drucksensoren, Bremszylinder, Bremspedalweggeber etc. sein.

Die vorstehend erwähnten Speicherplätze können besonders vorteilhaft über einen digitalen Fahrzeugbus, wie etwa CAN, zum Lesen oder Schreiben von Daten eingesetzt werden.

Nach einer bevorzugten Ausführungsform werden die Betriebsdaten in einem oder mehreren Speicherelementen permanent gespeichert. Unter dem Begriff "permanente Speicherung" wird verstanden, dass der Inhalt des Speichers auch bei ausgeschalteter Betriebsspannung (Zündung) erhalten bleibt. Zur Speicherung der Daten kann insbesondere ein Flash-ROM, ein EEPROM oder ein batteriegepuffertes RAM verwendet werden. Die Betriebsdaten können entweder bei der Herstellung des Bremsenreglers oder am Band während der Kraftfahrzeugherstellung in den Permanentspeicher eingeschrieben werden.

Vorzugsweise ist zusätzlich auch in dem elektronischen Steuergerät mindestens ein Speicherbauelement zur permanenten Speicherung von Kalibrierdaten vorgesehen, so dass die einmal übertragenen Daten bei ausgeschalteter Zündung redundant vorhanden sind.

Sind mehrere Funktionskomponenten mit individuellen Kalibrierdaten vorhanden, so kann es zweckmäßig sein, dass die Kalibrierdaten für mehrere Komponenten individuell ausgelesen werden können. Besonders zweckmäßig, jedoch in der Regel mit einem höheren Schaltungsaufwand verbunden ist es, wenn die Daten zusätzlich auch individuell durch die Elektronikeinheit gespeichert werden können.

Nach einer bevorzugten Ausführungsform der Erfindung werden die Betriebsdaten beim Zusammenfügen bzw. -stecken von Elektronikeinheit und Hydraulikeinheit oder beim ersten Einschalten (Zündungshochlauf) automatisch übertragen. Ganz besonders bevorzugt werden in einem gesonderten Initialisierungsprozess z.B. bei der Fertigung oder erstmaliger Paarung zunächst die Betriebsdaten an die Hydraulikeinheit übertragen, wobei die Bereitstellung der Daten vom Steuergerät und/oder einem Fertigungsautomaten erfolgen kann. Später, etwa nach dem Einbau in das Kraftfahrzeug, stehen die Betriebsdaten dann dauerhaft zur Verfügung.

Wird eine unzulässige Paarung von Elektronikeinheit und Hydraulikeinheit erkannt, kann bevorzugt vorgesehen sein, dass eine Warnmeldung erzeugt wird. Alternativ kann vorgesehen sein, dass in diesem Fall das Bremssystem teilweise oder vollständig abgeschaltet wird.

Nach einer weiteren bevorzugten Ausführungsform des Verfahrens ist in der Elektronikeinheit ein Diagnosemodus vorgesehen, in dem die Betriebsdaten oder auswählbare Teile der Betriebsdaten in einem flüchtigen Speicher außerhalb der Elektronikeinheit gespeichert werden können. Mit einem entsprechenden Diagnosemodus, welcher beispielsweise einen bereits im Fahrzeug (anderes Steuergerät) vorhandenen RAM-Speicher nutzt, kann vorteilhafterweise auf einen kostenintensiven zusätzlichen Permanentspeicher innerhalb des Bremssystems verzichtet werden. Durch den zusätzlichen Diagnosemodus ist es möglich, bei einem Teilausfall des elektronischen Steuergerätes vor dem Wechsel gegen ein Ersatzgerät die erforderlichen Betriebsdaten oder Teile davon im Fahrzeug zu sichern. Nach Austausch des Steuergeräts können die entsprechenden Daten dann in das erneuerte Steuergerät zurückübertragen werden. Besonders vorteilhaft kann die Speicherung der Betriebsdaten mehrfach oder an mehreren Stellen vorgenommen werden, so dass eine redundante Datenspeicherung realisierbar ist.

Die Erfindung betrifft auch ein elektrohydraulisches Bremsensteuergerät gemäß Anspruch 13, welches das vorstehende Verfahren durchführt.

Die Hydraulikeinheit umfasst vorzugsweise ein oder mehrere elektrisch ansteuerbare Analogventile.

Wie bereits beschrieben, können die Betriebsdaten entweder bei der Herstellung des Bremsenreglers oder am Band in den Permanentspeicher eingeschrieben werden. Sollen die Kalibrierdaten allerdings von dem elektronischen Steuergerät selbständig speicherbar sein, so kann es nach einer bevorzugten Ausführungsform erforderlich sein, dass das elektronische Steuergerät Mittel zur Umschaltung der Versorgungsspannung der sensorischen Baugruppe umfasst. Hierdurch kann, was zum Beschreiben des Speicherbauelements ggf. notwendig ist, das Speicherelement mit einer höheren Spannung versorgt werden.

Weitere bevorzugte Ausführungsformen ergeben sich aus den Unteransprüchen und der nachfolgenden Beschreibung der Figuren.

Es zeigen
- Fig. 1: eine schematische Darstellung eines Bremsensteuer- geräts mit einer Einrichtung zur Speicherung von Kalibrierdaten,
- Fig. 2: die Darstellung des Signalverlaufs bei einer seriellen Schnittstelle zur aufeinanderfolgenden Übertragung von Kalibrierdaten und Sensordaten, und
- Fig. 3,4: weitere Beispiele für Signalverläufe einer seriel- len Schnittstelle zur gleichzeitigen Übertragung von Kalibrierdaten und Sensordaten.

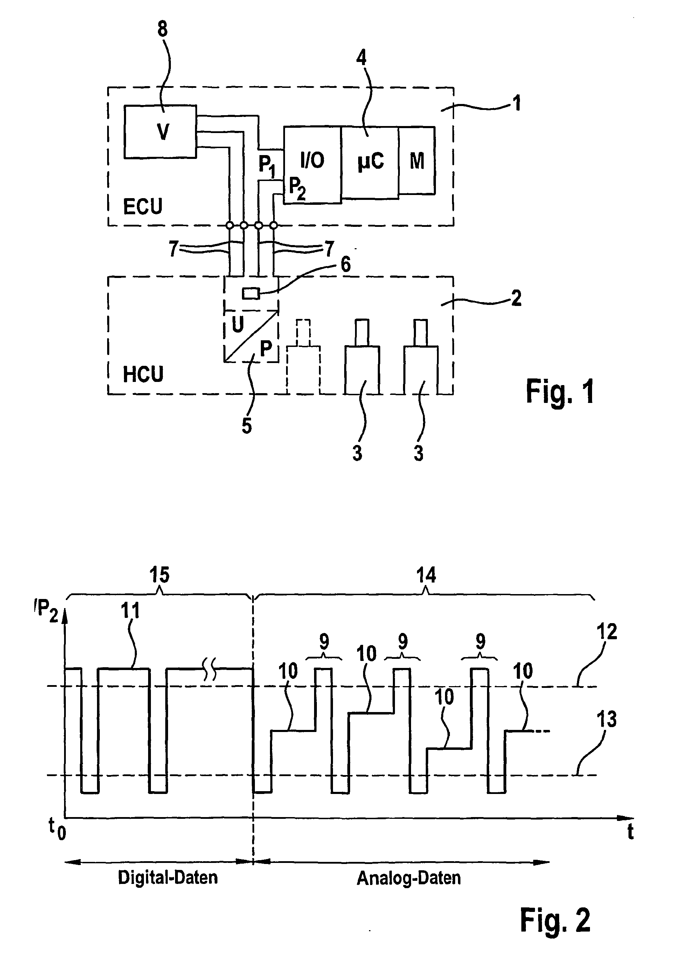

In Fig. 1 ist elektronisches Bremsensteuergerät 1 mit einer Hydraulikeinheit 2 verbunden, welche analog ansteuerbare Hydraulikventile 3 umfasst. Hydraulikventile 3 werden zur Steuerung der Bremsfunktion über eine in Steuergerät 1 angeordneten Mikroprozessoreinheit 4 angesteuert. Innerhalb der von der Elektronikeinheit 1 lösbaren Hydraulikeinheit 2 ist weiterhin ein Drucksensor 5 angeordnet, welcher zur Aufbereitung des Drucksignals ASIC 6 umfasst, und bei Trennung von Hydraulikeinheit und Elektronikeinheit Bestandteil der Hydraulikeinheit bleibt. ASIC 6 ist über elektrische Leitungen 7 und nichtgezeichnete Kontakte mit Steuergerät 1 verbunden. Zum Betrieb des Steuergeräts 1 ist außerdem eine Spannungsversorgung 8 vorgesehen, die eine Einrichtung zur Umschaltung auf verschiedene Betriebsspannungen umfasst.

Sensor 5 ist bevorzugt ein kombinierter Druck-/ Temperatursensor, welcher im Zeitmultiplexverfahren analoge Signale an Steuergerät 1 transferiert. Wie bereits beschrieben, handelt es sich bei Magnetventilen 3 um Analogventile, zu deren präzisen Ansteuerung durch Recheneinheit 4 Kalibrierdaten erforderlich sind. Die Kalibrierdaten werden in Steuergerät 1 und zusätzlich innerhalb eines Permanentspeichers (EEPROM) in ASIC 6 gespeichert.

In Signalteil 14 im Diagramm von Fig. 2 ist ein Datenprotokoll zur seriellen Übertragung von analogen Sensordaten über eine elektrische Leitung dargestellt. Synchronisationsimpulse 9 kennzeichnen jeweils den Beginn bzw. das Ende der Übertragung eines einzelnen analogen Spannungswertes 10, welcher die durch Sensor 5 bestimmte sensorische Größe angibt. Spannungsschwellen 12 und 13 sind Minimal- bzw. Maximalwerte für die zulässige Analogspannung der sensorischen Größe. Werden die Schwellen über- bzw. unterschritten, so wird das Signal als Synchronisationsimpuls 9 interpretiert.

In Signalteil 15 wird zum Zeitpunkt t₀ die Zündung des Kraftfahrzeugs auf "EIN" geschaltet. Durch ein entsprechend an ASIC 6 weitergeleitetes Startsignal (z.B. Betriebsspannung "EIN") wird vor der Analogwertübertragung zunächst mit der seriellen Übertragung von Digitaldaten 11 begonnen. Wenn die Übertragung eines Datenblocks bestehend aus Digitaldaten 11 beendet ist, beginnt die Übertragung der Analogdaten, welche durch analoge Spannungswerte 10 repräsentiert werden. Es ist zweckmäßig, wenn bei der Digitalübertragung eines Datenblocks alle Betriebsdaten einschließlich eventuell vorhandener Prüfdaten vollständig übertragen werden. Ein solcher Block kann zum Beispiel eine Länge von 112 Bit haben.

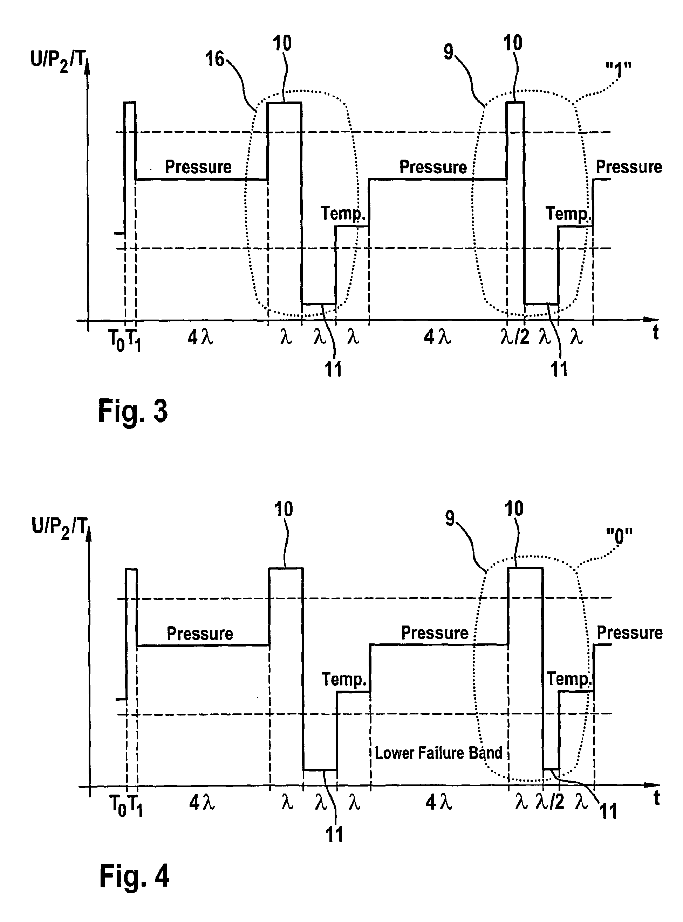

In Figuren 3 und 4 ist ein ähnliches Datenprotokoll, wie in Fig. 2 dargestellt, angegeben, mit dem Unterschied, dass die bitweise Übertragung der Digitaldaten während der Übertragung der analogen Spannungswerte durch Modulation der Synchronisationsimpulse 9 durchgeführt wird. Hierbei wird in Kauf genommen, dass die Übertragung der Digitaldaten länger andauert, als bei der Übertragung entsprechend dem Beispiel in Fig. 2. Zur Übertragung eines einzelnen Bits "0" oder "1" wird jeweils ein Synchronisationsimpuls 9 in geeigneter Weise moduliert. Zweckmäßigerweise wird hierzu die Dauer eines Impulses, welcher normalerweise die Länge At=λ hat, im Falle einer zu übertragenden Bitinformation halbiert, so dass dieser eine Länge von hat. Dabei kann insbesondere, wenn Synchronisationsimpuls 9 einen ersten Teilpuls 10 und einen zweiten Teilpuls 11 besitzt, die Halbierung des Teilpulses 10 eine logische "1" repräsentieren und die Halbierung des Teilpulses 11 eine logische "0". Andere Signalformen, wie beispielsweise Synchronisationsimpulse 16 mit zwei Impulsen der Länge Δ*t*=λ, werden nicht als Bitinformation interpretiert.

Es,ist ebenfalls möglich und besonders zweckmäßig, die Übertragung der Digitaldaten zu Beginn der Analogübertragung gemäß dem Beispiel in Fig. 2 mit der kontinuierlichen, repetierenden Digitalübertragung in den Figuren 3 und 4 zu kombinieren. So kann es ganz besonders zweckmäßig sein, zunächst nach Empfang eines Einschaltsignals (Zündung an) einen Block mit Prüfinformationen zu übertragen und später, nach dem kontinuierlichen Verfahren, die Übertragung der Betriebsdaten vorzunehmen. sind die benötigten Prüfinformationen zumindest einmal an die Elektronikeinheit erfolgreich übertragen worden, kann von diesem Zeitpunkt an nach einer Spannungsunterbrechung z.B. in Folge eines Spannungseinbruchs die serielle Datenübertragung an einer beliebigen Bitposition fortgesetzt werden.

## Patentansprüche

1. Verfahren zur Bereitstellung von Betriebsdaten von Funktionskomponenten eines Kraftfahrzeugbremsensteuergeräts, wie insbesondere Analogventile oder Sensoren, in einem Bremsensteuergerät, welches eine Elektronikeinheit und eine mit der Elektronikeinheit nach dem Prinzip eines magnetischen Steckers verbundene Hydraulikeinheit umfasst, wobei die Funktionskomponenten mit der Hydraulikeinheit mechanisch oder funktionell verbunden sind und bei dem die Betriebsdaten durch eine in der Elektronikeinheit vorhandene elektronische Recheneinheit in einem oder mehreren Speicherelementen gespeichert werden, **dadurch gekennzeichnet, dass** die Speicherelemente außerhalb des Gehäuses der Elektronikeinheit angeordnet sind, wobei
- die Betriebsdaten Ventil-Kalibrierdaten für elektrohydraulische Ventile des Bremssystems sind und
- die Betriebsdaten Kenndaten sind, mit denen unzulässige Paarungen von Elektronikeinheit und Hydraulikeinheit feststellbar sind.

2. Verfahren nach Anspruch 1, **dadurch gekennzeichnet, dass** die Speicherelemente zur Speicherung der Betriebsdaten im Bereich der Hydraulikeinheit und/oder in einem mit der Hydraulikeinheit verbundenen Pumpenmotor und/oder in einer oder mehreren Sensorbaugruppen angeordnet sind.

3. Verfahren nach Anspruch 1, **dadurch gekennzeichnet, dass** die Speicherelemente zur Speicherung der Betriebsdaten in einem extern angeordneten elektronischen Steuergerät, welches zum Bremssystem gehört, gespeichert werden.

4. Verfahren nach mindestens einem der Ansprüche 1 bis 3, **dadurch gekennzeichnet, dass** die Betriebsdaten für mehrere Funktionskomponenten individuell gespeichert und ausgelesen werden können.

5. Verfahren nach mindestens einem der Ansprüche 1 bis 4, **dadurch gekennzeichnet, dass** die Betriebsdaten unmittelbar nach dem Zusammenfügen von Elektronikeinheit und Hydraulikeinheit oder ausgelöst durch einen Einschaltvorgang übertragen werden.

6. Verfahren nach mindestens einem der Ansprüche 1 bis 5, **dadurch gekennzeichnet, dass** die Übertragung der Betriebsdaten zur sensorischen Baugruppe über eine serielle Schnittstelle erfolgt.

7. Verfahren nach mindestens einem der Ansprüche 2 bis 6, **dadurch gekennzeichnet, dass** die Betriebsdaten und die Sensordaten der zum Speichern verwendeten Sensorbaugruppe über eine gemeinsame Leitung übertragen werden.

8. Verfahren nach Anspruch 7, **dadurch gekennzeichnet, dass** die Betriebsdaten und die Sensordaten über eine serielle Schnittstelle übertragen werden, wobei die Sensordaten in Form von analogen Strom- oder Spannungswerten und die Betriebsdaten in Form von Digitalimpulsen übertragen werden.

9. Verfahren nach mindestens einem der Ansprüche 2 bis 8, **dadurch gekennzeichnet, dass** nach einer teilweisen oder vollständigen Übertragung von Betriebsdaten nach dem Anschaltvorgang sich eine Übertragung der Sensordaten anschließt.

10. Verfahren nach Anspruch 8 oder 9, **dadurch gekennzeichnet, dass** der Beginn bzw. das Ende der Übertragung eines einzelnen Analogwertes (10) durch Synchronisationsimpulse (9) **gekennzeichnet** wird.

11. Verfahren nach mindestens einem der Ansprüche 8 bis 10, **dadurch gekennzeichnet, dass** zur Synchronisation der Digitalübertragung und/oder zur Fehlererkennung Prüfdaten, insbesondere Prüfsummen übertragen werden.

12. Verfahren nach mindestens einem der Ansprüche 1 bis 11, **dadurch gekennzeichnet, dass** in der Elektronikeinheit ein Diagnosemodus vorgesehen ist, in dem die Betriebsdaten oder auswählbare Teile der Betriebsdaten in einem flüchtigen Speicher außerhalb der Elektronikeinheit gespeichert werden.

13. Elektrohydraulisches Bremsensteuergerät, bestehend aus einer Elektronikeinheit (1) und einer mit dieser verbundene Hydraulikeinheit (2) mit elektrisch ansteuerbaren Ventilen, **dadurch gekennzeichnet, dass** das Bremsenteuergerät derat ausgebildet ist, um das Verfahren nach mindestens einem der Ansprüche 1 bis 12 durchzuführen, und dass im Bereich der von der Elektronikeinheit abtrennbaren Hydraulikeinheit, insbesondere in der Elektronik eines Pumpenmotors oder eines Sensors, mindestens ein speicherresidentes elektronisches Speichermittel zur Speicherung von Kalibrierdaten vorgesehen ist.

14. Elektrohydraulisches Steuergerät nach Anspruch 12, **dadurch gekennzeichnet, dass** eine serielle Schnittstelle vorgesehen ist, mit der die Kalibrierdaten zwischen der Elektronikeinheit und der Hydraulikeinheit übertragen werden können.

## Claims

1. Method for providing operating data relating to functional components of a motor vehicle braking control unit, such an analogue valves or sensors in particular, in a braking control unit which comprises an electronic unit and a hydraulic unit which is connected to the electronic unit according to the principle of a magnetic connector, the functional components being mechanically or functionally connected to the hydraulic unit, and in which the operating data are stored in one or more memory elements by an electronic computation unit provided in the electronic unit, **characterized in that** the memory elements are arranged outside the housing of the electronic unit,
- the operating data being valve calibration data for electrohydraulic valves of the braking system, and
- the operating data being characteristic data which can be used to determine impermissible pairings of the electronic unit and the hydraulic unit.

2. Method according to Claim 1, **characterized in that** the memory elements for storing the operating data are arranged in the region of the hydraulic unit and/or in a pump motor connected to the hydraulic unit and/or in one or more sensor assemblies.

3. Method according to Claim 1, **characterized in that** the memory elements for storing the operating data are stored in an externally arranged electronic control unit which belongs to the braking system.

4. Method according to at least one of Claims 1 to 3, **characterized in that** the operating data can be individually stored and read for a plurality of functional components.

5. Method according to at least one of Claims 1 to 4, **characterized in that** the operating data are transmitted immediately after the electronic unit and hydraulic unit have been joined or in a manner triggered by a switch-on operation.

6. Method according to at least one of Claims 1 to 5, **characterized in that** the operating data are transmitted to the sensor assembly via a serial interface.

7. Method according to at least one of Claims 2 to 6, **characterized in that** the operating data and the sensor data from the sensor assembly used for storage are transmitted via a common line.

8. Method according to Claim 7, **characterized in that** the operating data and the sensor data are transmitted via a serial interface, the sensor data being transmitted in the form of analogue current or voltage values and the operating data being transmitted in the form of digital pulses.

9. Method according to at least one of Claims 2 to 8, **characterized in that** transmission of the sensor data follows partial or complete transmission of operating data after the switch-on operation.

10. Method according to Claim 8 or 9, **characterized in that** the start and end of the transmission of an individual analogue value (10) are indicated by synchronization pulses (9).

11. Method according to at least one of Claims 8 to 10, **characterized in that** test data, in particular checksums, are transmitted in order to synchronize digital transmission and/or to detect errors.

12. Method according to at least one of Claims 1 to 11, **characterized in that** a diagnostic mode is provided in the electronic unit, in which mode the operating data or selectable parts of the operating data are stored in a volatile memory outside the electronic unit.

13. Electrohydraulic braking control unit consisting of an electronic unit (1) and a hydraulic unit (2) which is connected to the latter and has electrically controllable valves, **characterized in that** the braking control unit is designed to carry out the method according to at least one of Claims 1 to 12, and **in that** at least one memory-resident electronic memory means for storing calibration data is provided in the region of the hydraulic unit which can be separated from the electronic unit, in particular in the electronics of a pump motor or a sensor.

14. Electrohydraulic control unit according to Claim 12, **characterized in that** a serial interface is provided and can be used to transmit the calibration data between the electronic unit and the hydraulic unit.

## Revendications

1. Procédé de fourniture de données d'exploitation de composants fonctionnels d'un dispositif de commande de frein d'un véhicule, tels que, en particulier, des soupapes analogiques ou des capteurs, dans un dispositif de commande de frein comprenant une unité électronique et une unité hydraulique reliée à l'unité électronique selon le principe d'une fiche magnétique, les composants fonctionnels étant reliés de manière mécanique ou fonctionnelle à l'unité hydraulique et dans lequel les données d'exploitation sont stockées par une unité de calcul électronique présente dans l'unité électronique dans un ou plusieurs éléments de mémoire, **caractérisé en ce que** les éléments de mémoire sont disposés en dehors du boîtier de l'unité électronique,
- les données d'exploitation étant des données d'étalonnage de soupape pour les soupapes électro-hydrauliques du système de freinage ; et
- les données d'exploitation étant des données caractéristiques permettant de déterminer des associations par paire non admissibles de l'unité électronique et de l'unité hydraulique.

2. Procédé selon la revendication 1, **caractérisé en ce que** les éléments de mémoire pour le stockage des données d'exploitation sont disposés dans la zone de l'unité hydraulique et/ou dans un moteur de pompe relié à l'unité hydraulique et/ou dans un ou plusieurs ensembles capteurs.

3. Procédé selon la revendication 1, **caractérisé en ce que** les éléments de mémoire pour le stockage des données d'exploitation sont stockés dans un dispositif de commande électronique disposé à l'extérieur, qui fait partie du système de freinage.

4. Procédé selon au moins l'une des revendications 1 à 3, **caractérisé en ce que** les données d'exploitation de plusieurs composants fonctionnels peuvent être stockées et extraites individuellement.

5. Procédé selon au moins l'une des revendications 1 à 4, **caractérisé en ce que** les données d'exploitation sont transmises directement après la liaison de l'unité électronique et de l'unité hydraulique ou de manière déclenchée par un phénomène transitoire.

6. Procédé selon au moins l'une des revendications 1 à 5, **caractérisé en ce que** la transmission des données d'exploitation vers l'ensemble sensoriel a lieu par l'intermédiaire d'une interface série.

7. Procédé selon au moins l'une des revendications 2 à 6, **caractérisé en ce que** les données d'exploitation et les données de capteur de l'ensemble capteur utilisé pour le stockage sont transmises par l'intermédiaire d'une ligne commune.

8. Procédé selon la revendication 7, **caractérisé en ce que** les données d'exploitation et les données de capteur sont transmises par l'intermédiaire d'une interface série, les données de capteur étant transmises sous la forme de valeurs analogiques de courant ou de tension et les données d'exploitation étant transmises sous la forme d'impulsions numériques.

9. Procédé selon au moins l'une des revendications 2 à 8, **caractérisé en ce qu'**une transmission partielle ou complète des données d'exploitation après le phénomène transitoire est suivie d'une transmission des données de capteur.

10. Procédé selon la revendication 8 ou 9, **caractérisé en ce que** le début ou la fin de la transmission d'une valeur analogique individuelle (10) est **caractérisé**(e) par des impulsions de synchronisation (9).

11. Procédé selon au moins l'une des revendications 8 à 10, **caractérisé en ce que** des données de contrôle, en particulier des sommes de contrôle, sont transmises pour la synchronisation de la transmission numérique et/ou pour la détection d'erreurs.

12. Procédé selon au moins l'une des revendications 1 à 11, **caractérisé en ce qu'**un mode de diagnostic est prévu dans l'unité électronique, dans lequel les données d'exploitation ou des parties sélectionnables des données d'exploitation sont stockées dans une mémoire volatile en dehors de l'unité électronique.

13. Dispositif de commande de frein électro-hydraulique, comprenant une unité électronique (1) et une unité hydraulique (2) reliée à celle-ci, avec des soupapes pouvant être commandées électriquement, **caractérisé en ce que** le dispositif de commande de frein est formé de manière à mettre en oeuvre le procédé selon au moins l'une des revendications 1 à 12, et **en ce qu'**il est prévu, dans la zone de l'unité hydraulique séparable de l'unité électronique, en particulier dans l'électronique d'un moteur de pompe ou d'un capteur, au moins un moyen de mémoire électronique résidant en mémoire pour le stockage des données d'étalonnage.

14. Dispositif de commande électro-hydraulique selon la revendication 12, **caractérisé en ce qu'**il est prévu une interface série permettant de transmettre les données d'étalonnage entre l'unité électronique et l'unité hydraulique.
